# EUROPEAN PATENT SPECIFICATION

(11) **EP 3 235 617 B1**
(45) Date of publication and mention of the grant of the patent: **01.01.2020**
(21) Application number: 15889169.7
(22) Date of filing: 15.04.2015
(51) Int. Cl.: B29C 45/33, B29C 45/44, B29C 45/26, B29C 45/32

(54) **DEVICE FOR ASSISTING IN RELEASE OF MOLDED PRODUCT**
VORRICHTUNG ZUR UNTERSTÜTZUNG DER FREISETZUNG EINES FORMPRODUKTS
DISPOSITIF D'AIDE À LA LIBÉRATION D'UN PRODUIT MOULÉ

(43) Date of publication of application: 25.10.2017
(73) Proprietor: Ecovent Kabushiki Kaisha, Yokohama-shi, Kanagawa 2230057 (JP)
(72) Inventor: SAITO, Teruhiko, Nagai-shi Yamagata 993-0001 (JP)
(74) Representative: Samson & Partner Patentanwälte mbB
(86) International application number: PCT/JP2015/061568
(87) International publication number: WO 2016/166831

(56) References cited:
- EP-A1- 3 156 203
- JP-A- 2007 118 429
- JP-U- H0 347 110
- JP-U- H0 735 015
- US-A1- 2006 045 933

## Description

### TECHNICAL FIELD

The present invention relates to the device for assisting in the release of the molded product which makes smooth mold release of the molded product manufactured considering various plastic materials as raw materials, and especially relates to the device for assisting in the release of the cylindrical molded product formed as an undercut part in the mold provided with the inclined slide mechanism.

### BACKGROUND ART

Various plastic molded product is used for the extensive field such as home electronics, other daily needs, office supplies, various industrial machines, equipment, transportation, transportation agencies, etc. of many including an automobile, a railroad, an airplane, etc. and the use is expanded increasingly. There are three-dimensional or complicated shape and structure of various plastic products used in these products. The molding of such complicated shape and structure is molded by dividing it into multiple steps for each part or unit which can be die-cut conventionally, it is constructed as an assembly of the required form by combining the respective parts for each unit and by using appropriate means such as adhesion, welding, screwing, connection assistant metal fittings.

However, the manufacturing process becomes complicated in order to perform a combination work of a plurality of such members, parts, etc., and it is often difficult to manufacture the apparatus in a compact size and a simple configuration. If the mold releasing process which is the final stage of the molding process is not performed smoothly, efficient molding becomes difficult, in the case where occurrence of an undercut portion which serves as a concavo-convex portion of the molded product and which becomes an obstacle in releasing process of removing the molded article from the mold is inevitable, the working efficiency is extremely lowered.

Conventionally, the cylindrical body (pipe shaped member) is manufactured alone, and most integral forming by a mold is not needed. The cylindrical body which is not configured as undercut parts but simply protrude on a flat plate is released by using a sleeve pin and a core pin by a usual die-cutting die which does not have an inclined sliding function. In such metal mold, since the mold release resistance becomes large in the release treatment of the cylindrical body held by the core pin holding the hollow portion of the cylindrical body, the mold release is carried out by pushing up the cylindrical body with a sleeve pin in order to assist release.

Patent reference 1 exists as a prior art reference about such a mold. This reference discloses the injection molding die which forms integrally projected parts, such as a rib and a boss, in the back surface side of a molded product, and here, it consists of a middle pin which serves as an insert for forming the hole of the boss at its tip and a sleeve pin which is slidably fitted to the outer periphery of the middle pin so as to form the protruding end face of the boss at its front end face, it is an object of the present invention to prevent sink marks (sync marks) from being generated on the surface side of the molded product as the boss is cooled and solidified by the front end of the sleeve pin pressing the protruding end of the boss. The boss molded with this mold is not formed as an undercut part.

Patent reference 2 exists as a prior art reference about the mold provided with the inclined slide mechanism for releasing an undercut part from mold reliably. Patent reference 2 discloses the mold devise for resin mold which comprises the cavity 2 of the mold used for resin mold article manufacture, the core 3 which can move relative to this cavity, the ejector plate 4 which is provided behind this core and can move relative to this cavity, the inclined slide 6 which is connected to the inclined core part 21 provided at the one end side in order to form the undercut part of a resin molded product, which has the inclined pin 22 inserted in the core 3, and which is provided with the slide unit 23 which slides on the other end side of this inclined pin 22 free to the ejector plate 4. Here, the inclined slide 6 is provided with the projecting amount control means for guiding the inclined pin 22 so that the quantity in which the inclined core part 21 projects may become small as compared with the distance to which the ejector plate 4 moves forward to the core 3 side at the time of mold release with the cavity 2 and the core 3. In the inclined slide mechanism disclosed in the Patent reference 2, generating of the undercut part's bending, damage, etc. was not able to be thoroughly prevented in particular in mold release of a thin and long and slender molded product.

Then, in Patent Application No. 2014-555013, the inventor is provided the device for assisting in the release of the molded product enabling mold molding of the various plastics product in the three-dimensional and complicated form and structure, by arranging the inclined shaft which the pin member is inserted in and provided with the free movable horizontal through hole, and the vertical shaft provided with the pin member, and by supporting mold release of the protruding part which protrudes on the plate formed as an undercut part in the case of mold release in the mold with the inclined slide mechanism. However, it is a protruding part formed as the undercut part in this support device, and it is impossible for smooth mold release of the protruding part (cylindrical protrusion section) of the cylindrical body of the cavity inside.

Japanese Utility Model No. 047110/1991 discloses a molding device for molding a molded body with an undercut part. The molding device comprises a mold with an upper mold, lower mold, a slide plate, a first slide core, a second slide core having a horizontal slide pin and a third vertical slide core.

From JP 2007/118429 A, a mold device is known which can mold a molded article by pushing out a slide core which has a recess part for forming an undercut part for the molded article, from a movable insert with a rod.

Japanese Utility Model No. 035015/1995 discloses a molding device comprising a cavity mold and a core mold forming a panel body. The core mold includes a pin and a gas supply passage. Further, a sliding top portion attached to the core mold forms an undercut part when molding is carried out. PRIOR ART REFERENCE

### PATENT REFERENCE

Patent reference 1: Japanese Published Patent Application No. 2004-188792
Patent reference 2: Japanese Published Patent Application No. H10-264217

### SUMMARY OF INVENTION

### PROBLEM TO BE SOLVED BY INVENTION

The problem given to the present invention is providing the device for assisting in the release of the molded product which makes smooth mold release of the resin molded product in which the cylindrical protrusion section formed as the undercut part in the mold provided with the inclined slide mechanism is put together. The together. The present invention releases from mold smoothly the various complicated products which comprise two or more copy articles, such as wheel part articles such as an engine part, communication equipment such as a wiring part, and home electronics, for example, when integral and manufacturing at once, and it provides the device for assisting in the release which can be manufactured by the fewest possible processes.

Since smooth mold release of the cylindrical protrusion section formed as an undercut part in the device for assisting in the release of the molded product which the inventor proposed in Patent Application No. 2014-555013 is impossible, the inventor repeated research further and resulted in the present invention which enables three-dimensional mold molding integral in complicated form and the various plastics of structure by which the cylindrical protrusion section is put together, and which is and carries out.

### MEANS FOR SOLVING PROBLEM

The present invention is a device for assisting in a release of a molded product in a mold provided with an inclined slide mechanism according to appended claim 1. Preferred embodiments are disclosed in the dependent claims.

In the present invention the rod-shaped pin member 30 is preferably inserted into the horizontal through hole 13 at a constant interval (constant width) 153 between the bottom end of the cylindrical protrusion section and the front end 32 of the rod-shaped pin member. In the present invention the inclined shaft 10 and the vertical shaft 20 are preferably extended in the horizontal direction, a set of components having the horizontal through hole 13, the rod-shaped pin member 30, the cylindrical pin member 21 and the through hole 22 are preferably arranged in the horizontal direction in the number corresponding to the number of the cylindrical protrusion to be the molded object, the device is configured so that the mechanism for operating the rod-shaped pin member and the cylindrical pin member operate simultaneously. In the present invention the set of components are preferably arranged in the vertical direction in the number corresponding to the number of the cylindrical protrusion to be the molded object, the device is configured so that the mechanism for operating the rod-shaped pin member and the cylindrical pin member operate simultaneously.

In the present invention a plurality of the devices for assisting in the release according to the present invention are preferably arranged in the same direction, the mechanism for operating the rod-shaped pin member and the cylindrical pin member operate simultaneously. In the present invention the device for assisting in the release according to the present invention is arranged with the inclined shaft 10 side facing, the mechanism for operating the rod-shaped pin member and the cylindrical pin member operate simultaneously. In the represent invention the sectional shapes of the horizontal through hole 13, the rod-shaped pin member 30, the cylindrical pin member 21 and the through hole 22 are preferably formed inside the vertical shaft according to the present invention and are preferably determined and processed according to the shape corresponding to the sectional shape of the outer circumferential frame 152 of the cylindrical protrusion section 52 and/or a hollow section 154 of the cylindrical protrusion section to be the molded object.

### EFFECT OF INVENTION

The device for assisting in the release of the molded product according to the present invention is a simple structure with the inclined shaft which is formed the inclined sliding portion which functions as the inclined slide mechanism, and the vertical portion having the horizontal through hole and the rod-shaped pin member, and the vertical shaft which is entirely parallel to the vertical portion, which has substantially a same length with the inclined shaft, which fixes a cylindrical pin member movably inserted into a space formed between an inner wall surface of the horizontal through hole of the inclined shaft and an outer circumferential surface of the rod-shaped pin member in the horizontal direction, and which forms a through hole allowing the rod-shaped pin member to move. The device of the present invention is required to have high precision in fabrication, but can be manufactured at low cost.

In the present invention, the vertical portion of the inclined shaft is processed so that the molded product side forms the shape corresponding to the shape of the suspended section of the molded product, the rod-shaped pin member is inserted in a central part of the horizontal through hole of the vertical portion until it reaches a bottom end of a cylindrical protrusion section which is projected to the suspended section, an outer circumferential frame of the cylindrical protrusion section which has a predetermined thickness is provided in the space of the horizontal through hole until it reaches a predetermined position, and the cylindrical pin member which has substantially a same thickness with the outer circumferential frame is movably inserted in the space from the position where a front end of the outer circumferential frame touches to an end of the horizontal through hole.

In such structure, the inclined shaft and the vertical shaft are simultaneously moved up and down, the inclined shaft moves closer to the vertical shaft side with the rising movement, as this movement of the inclined shaft, the vertical portion of the inclined shaft is separated from the suspended section of the molded product and the cylindrical protrusion section, the rod-shaped pin member comes out of a hollow section of the cylindrical protrusion section, and the front end of the cylindrical pin member inserted in the space protrudes from the horizontal through hole, the front end of the cylindrical pin member touches the front end of the outer circumferential frame of the cylindrical protrusion section to press the cylindrical protrusion section not to be moved. Therefore, without using an external control means etc., deformation, damage, etc. which tend to occur in the release process of the cylindrical protrusion section formed as an undercut part under the molded product can be prevented reliably, and smooth mold release can be assisted and supported.

In the present invention, the rod-shaped pin member is inserted into the horizontal through hole at a constant interval (constant width) between the bottom end of the cylindrical protrusion section and the front end of the rod-shaped pin member. In this way, it is possible to form the cylindrical protrusion section having the bottom forming a bottom surface with a constant thickness on the bottom side. A set of components having the horizontal through hole, the rod-shaped pin member, the cylindrical pin member and the through hole is arranged in the horizontal direction in the number corresponding to the number of the cylindrical protrusion to be the molded object, the device is configured so that the mechanism for operating the rod-shaped pin member and the cylindrical pin member operate simultaneously. In this way, it is possible to form the molded product in which a plurality of cylindrical protrusion sections are arranged horizontally. It is possible to mold the molded product in which a plurality of cylindrical protrusion sections are formed one after the other by arranging the set of components in the vertical direction.

In the present invention, a plurality of the devices for assisting in the release according to the present invention are arranged in the same direction or arranged with the inclined shaft side facing, the operating mechanism of the pin member operate simultaneously. In this way, it is possible to mold the molded product in which two or more cylindrical protrusion sections are arranged in the longitudinal direction.

In the present invention, sectional shapes of the horizontal through hole, the rod-shaped pin member, the cylindrical pin member and the through hole formed inside the vertical shaft are determined and processed according to the shape corresponding to the sectional shape of the outer circumferential frame of the cylindrical protrusion section and/or a hollow section of the cylindrical protrusion section to be the molded object. In this way, it is possible to form the cylindrical protrusion sections having the sectional shape of various the outer circumferential frame and the hollow.

### BRIEF DESCRIPTION OF DRAWINGS

[Fig. 1] A figure is an outline cross sectional view showing the principal part of the configuration example of a first embodiment of the device for assisting in the release according to the present invention.
[Fig. 2] A figure is an outline cross sectional view for describing the internal structure of the horizontal through hole of the inclined shaft according to the first embodiment, with (A) being the release process initial state, and (B) being the mold release state of the cylindrical protrusion section.
[Fig. 3] A figure is for describing operation and the function of the device in the release process of the device for assisting in the release according to the first embodiment, with (A) being the initial state of the release process, (B) being the operating state in the middle of the shaft rise, and (C) being the operating state at the time of mold release.
[Fig. 4] A figure is an outline cross sectional view showing the principal part of the configuration example of a second embodiment of the device for assisting in the release according to the present invention.
[Fig. 5] A figure is for showing the initial state (A) in the release process of the second embodiment, the operating state (B) in the middle of the shaft rise, and the operating state (C) at the time of mold release.
[Fig. 6] A figure is an outline perspective view showing the configuration example of a third embodiment of the device for assisting in the release according to the present invention.
[Fig. 7] A figure is an outline cross sectional view showing the principal part of the configuration example of a fourth embodiment of the device for assisting in the release according to the present invention.
[Fig. 8] A figure is an outline cross sectional view showing the principal part of the configuration example of a fifth embodiment of the device for assisting in the release according to the present invention.
[Fig. 9] A figure is an outline cross sectional view showing the principal part of the configuration example of a sixth embodiment of the device for assisting in the release according to the present invention.
[Fig. 10] A figure is for showing the example of the molded product to which the device for assisting in the release according to the present invention is applied, with (A) being the example of the molded product formed one cylindrical protrusion section, (B) being the example of the molded product formed of six cylindrical protrusion sections in horizontal direction and vertical direction, and (C) being the example of the molded product formed of multiple cylindrical protrusion sections of the continuous connection in horizontal and vertical direction and up and down direction.
[Fig. 11] A figure is for showing the example of the cylindrical protrusion section with circular sectional shape of the hollow section to which the device for assisting in the release according to the present invention is applied, with (A) being the outer circumferential frame with a circular sectional shape, (B) being the outer circumferential frame with a triangle sectional shape, (C) being the outer circumferential frame with a square sectional shape, and (D) being the outer circumferential frame with a circular sectional shape which formed a protruding part in a periphery.
[Fig. 12] A figure is for showing the example of the circular cylindrical protrusion section of a circular outer circumferential surface sectional shape of the outer circumferential frame to which the device for assisting in the release according to the present invention is applied, with (A) being the hollow section with a diamond sectional shape, (B) being the hollow section with a triangle sectional shape, and (C) being the hollow section with a square sectional shape.
[Fig. 13] A figure is for showing the example of the hollow section of the cylindrical protrusion section, and the sectional shape of outer circumferential frame to which the device for assisting in the release according to the present invention is applied, with (A) being the hollow section and the outer circumferential frame with a diamond sectional shape, (B) being the hollow section and the outer circumferential frame with a triangle sectional shape, and (C) being the hollow section and the outer circumferential frame with a square sectional shape.
[Fig. 14] A figure is for describing the size of the cylindrical protrusion section to which the device for assisting in the release according to the present invention is applied.

### MODES FOR CARRYING OUT INVENTION

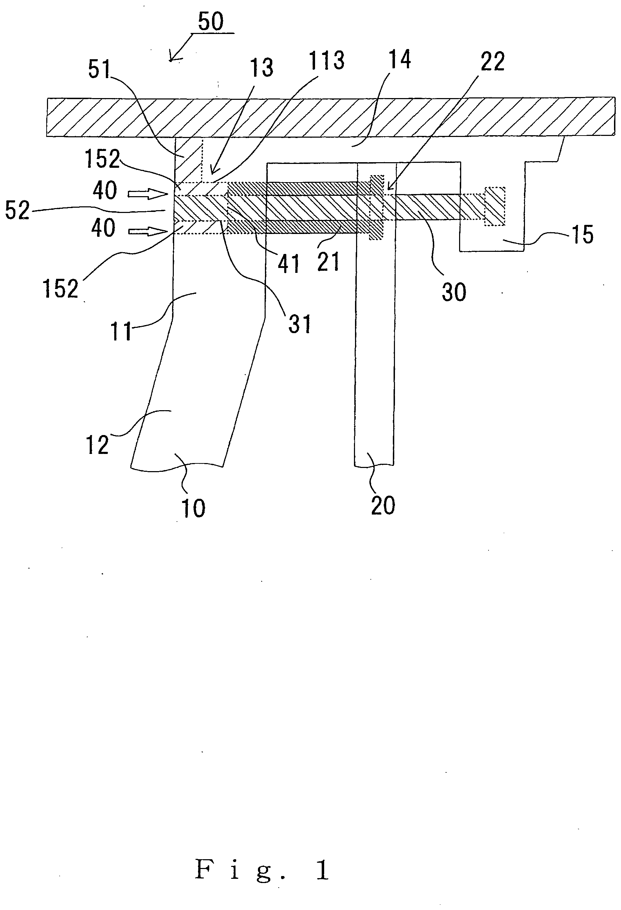

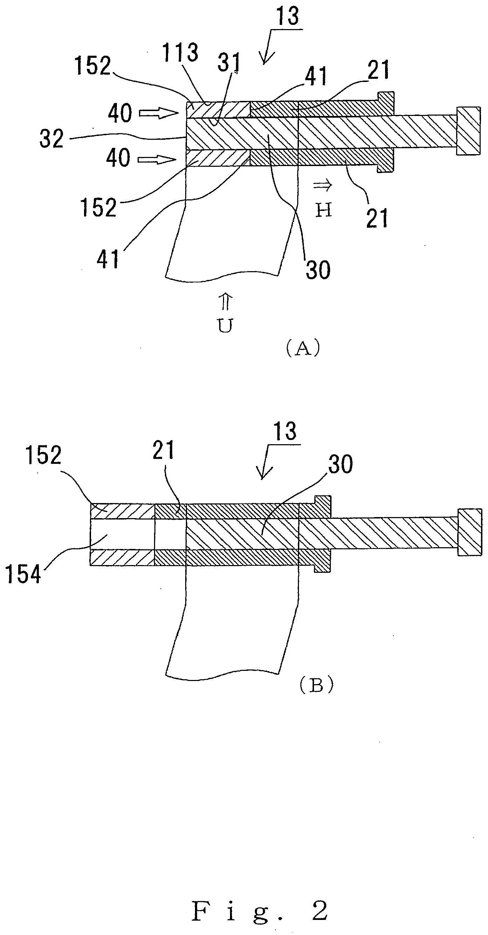

Hereinafter, the configuration example of the device for assisting in the release (only henceforth "this device") of the molded product according to the present invention, and the operation and function of the device in the release will be described with reference to the attached drawings. Fig.1 is the outline cross sectional view showing the principal part of the configuration example of the first embodiment of this device, and Fig.2 is the outline cross sectional view for describing the internal structure of the horizontal through hole of the inclined shaft, and the release process initial state (A) and the mold release state (B) of the cylindrical protrusion section. As shown in the figure, this device is a brief structure constituted by the inclined shaft 10 which exhibits an inclined slide function in the mold release device of the molded product in the mold provided with the inclined slide mechanism, and the vertical shaft 20.

The inclined shaft 10 makes the part in near an upper end part the vertically-shaped vertical portion 11, and serves as the inclined sliding portion 12 by which bending is carried out so that the lower part side of the vertical portion might become outward inclined form. The angle of inclination is not specified strictly. The vertical portion has the horizontal through hole 13 opened, the horizontal section 14 which makes a right angle is formed in an upper side, and the top surface of the horizontal section touches the cavity plate used as the molded product located above. The rod-shaped pin member fixing section 15 for fixing the rod-shaped pin member 30 in the horizontal direction is formed at the back end portion.

The vertical shaft is entirely parallel to the vertical portion 11 of the inclined shaft, and has substantially a same length with the inclined shaft. The cylindrical pin member 21 is fixed to the vertical shaft in the horizontal direction, and the through hole 22 is formed in the inside. The rod-shaped pin member is inserted in inside the cylindrical pin member, and the cylindrical pin member is movably inserted in space 40 formed between the inner wall surface 113 of the horizontal through hole, and the outer circumferential surface 31 of the rod-shaped pin member. The rod-shaped pin member is inserted in the through hole 22 in the movable state in the cylindrical pin member 21 inside, and the rod-shaped pin member is inserted in the central part of the horizontal through hole through the through hole 22 of the vertical shaft and the cylindrical pin member 21 inside.

As the fixing means of the rod-shaped pin member and the cylindrical pin member, the means of common use such as screwing and welding may be applied. The inclined shaft, the vertical shaft and the pin member are preferably made of a metal, and more preferably made of a hard metal. Although the vertical shaft side of the vertical portion in the inclined shaft is made into the vertical surface by a diagram, in the present invention, the inner side surface of the vertical portion can be made into the inclined surface, and may be the same inclined surface as the inclined surface of the inclined sliding portion.

The molded product side of the vertical portion 11 of the inclined shaft is processed so that it may become shape corresponding to the shape of the suspended section 51 formed under the molded product, and the size and shape such as width and length of the suspended section can be arbitrarily changed by processing of the shape of the portion which touches the suspended section on the molded product side of the vertical portion.

The rod-shaped pin member 30 is inserted without moving in a central part of the horizontal through hole formed in the vertical portion until it reaches a bottom end of a cylindrical protrusion section 52 which is projected to the suspended section, and the outer circumferential frame of the cylindrical protrusion section which has a predetermined thickness is provided until it reaches the position which touches a front end of the cylindrical pin member 21 from the bottom end of the cylindrical protrusion section in the space 40 formed between the inner wall surface of the horizontal through hole and the outer circumferential surface of the rod-shaped pin member. And the cylindrical pin member 21 which has substantially the same thickness with the outer circumferential frame is movably inserted in the space from the position 41 where the front end of the outer circumferential frame touches to the end of the horizontal through hole.

Although the structure the cylindrical pin member 21 is inserted in the space 40 formed between the inner wall surface of the horizontal through hole and the outer circumferential surface of the rod-shaped pin member in the diagram, in the initial state of the release process by improving the accuracy of design manufacture of this device, the outer circumferential frame of the cylindrical protrusion section is received to the back end portion of the horizontal through hole, the cylindrical pin member is arranged in the position which touches the back end portion of the horizontal through hole to prevent the outer circumferential frame from coming off, and it can be configured to be inserted in the inside of the space 40 with advance of the release process.

The molten resin ejected from the injection molding machine passes along the suspended section 51 from the cavity plate, and fills up to the position 41 which touches the front end of the cylindrical pin member 21 inserted in the space, as opposed to the space formed between the inner wall surface of the horizontal through hole and the outer circumferential surface of the rod-shaped pin member inserted in the central part, and the outer circumferential frame 152 of the cylindrical protrusion section as a molded product projected to the suspended section is molded. That is, the space to the front end of the cylindrical pin member between the inner wall surface of the horizontal through hole and the outer circumferential surface of the rod-shaped pin member will form the melting material filling space of the portion used as the outer circumferential frame of the cylindrical protrusion section.

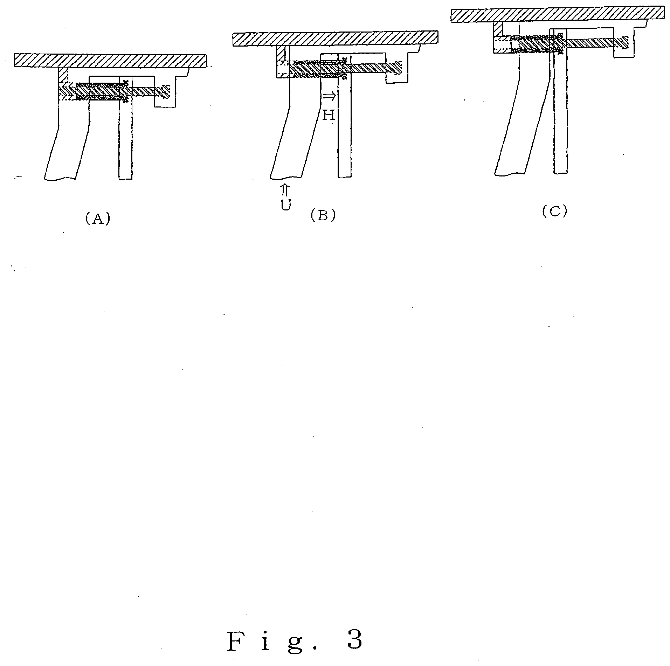

Next, with reference to Figs.1, 2 and 3, it describes about the operation and the function of the first embodiment of this device. Fig.3 is the figure for describing the operation and the function of the device in the release process of this device according to the first embodiment, and shows the initial state (A) of the release process, the operating state (B) in the middle of the shaft rise, and the operating state (C) at the time of mold release. The inclined shaft 10 and the vertical shaft 20 carry out rise-and-fall movement simultaneously by a synchronous state. The inclined shaft has a function of the inclined slide mechanism, and performs inclined slide movement, and the vertical portion 11 will carry out approach movement to the vertical shaft side by the operation of the inclined slide mechanism of the inclined sliding portion 12. When advanced the release process, it rises in the U direction and moves horizontally in the H direction to approach the vertical shaft side. The vertical shaft performs only rise-and-fall movement simultaneously with the inclined shaft, and it does not perform the movement of the horizontal direction. Therefore, even if the release process advances from the start of the release process and the shaft rises, the state where the front end of the cylindrical pin member is in contact with the front end of the cylindrical protrusion section 52 will be maintained as it is.

As shown in Figs.1, 2 and 3 (A), in the initial state of the release process, as mentioned above, the molded product side of the vertical portion touches the suspended section 51, the rod-shaped pin member 30 is inserted in the central part of the horizontal through hole 13, the cylindrical pin member 21 is inserted in space 40 to the predetermined position, and it fills up with the molten resin which serves as the outer circumferential frame 152 of the cylindrical protrusion section to the position 41 which touches the front end of the cylindrical pin member. The release process will be started after the cooling solidification of the molten resin.

The release process is started, as shown in Fig.3 (B), both shafts move upward in the U direction as the process advances, the inclined shaft also carries out the approaching movement toward the vertical shaft side along with the rising movement. By these movements, as the inclined shaft approaches the vertical shaft side during the rising movement, the vertical portion of the inclined shaft separates from the suspended section 51 and the cylindrical protrusion section 52 of the molded product, the rod-shaped pin member 30 fixed to the rod-shaped pin member fixing portion 15 of the inclined shaft moves together with the approach movement of the inclined shaft toward the vertical shaft side and comes out of the hollow section 154 of the cylindrical protrusion section 52.

The front end of the cylindrical pin member inserted in the space 40 projects from the horizontal through hole 13, when the release process advances and the shaft carries out the maximum rise, without separating, it is pressing down so that the front end of the cylindrical pin member may contact the front end of the outer circumferential frame of the cylindrical protrusion section and the cylindrical protrusion section may not move (refer to Fig.2 (B) and Fig.3 (C)). If the cylindrical protrusion section touches the vertical portion of the inclined shaft, the cylindrical protrusion section will move together with the rising and horizontal movement of the inclined shaft. It can prevent that the cylindrical protrusion section moves together with the inclined shaft by pressing down so that a cylindrical pin member point may contact the front end of the outer circumferential frame of the cylindrical protrusion section and the cylindrical protrusion section may not move.

In the state where both shafts rise to the maximum, as shown in Fig.2 (B) and Fig.3 (C), the vertical portion separated from the suspended section 51 and the cylindrical protrusion section 52, and the rod-shaped pin member 30 pulls out from the hollow section 154 of the cylindrical protrusion section 52. The front end of the cylindrical pin member is suppressed so that the front end of the outer circumferential frame of the cylindrical protrusion section may be contacted and the cylindrical protrusion section may not move. The contact to the front end of the cylindrical protrusion section of the cylindrical pin member point means not a pressing force from the cylindrical pin member side but a state of simply touching and pressing the cylindrical protrusion section so as not to move. Then, the molded product is thrust up while the front end of the cylindrical pin member suppresses the cylindrical protrusion section, and the release process is completed. With such operation and function, it will assist and this mold release support device will be supported so that releasing treatment may be carried out smoothly.

The timing which performs such mold release support operation should be determined in consideration of the appropriate processing time without excess or deficiency in consideration of terms and conditions, such as a kind of plastic used which is raw materials, influence of a use subsidiary material, structure of a molded body, and ambient air temperature. The rise-and-fall guiding part which has a guide hole which can be penetrably received from the lower side of the inclined shaft and the vertical shaft is fixed and arranged in the mold, the horizontal movement on the vertical shaft side of the inclined shaft and simultaneous rise-and-fall movement of the vertical shaft and the inclined shaft is performed reliably according to guidance of the rise-and-fall guiding part.

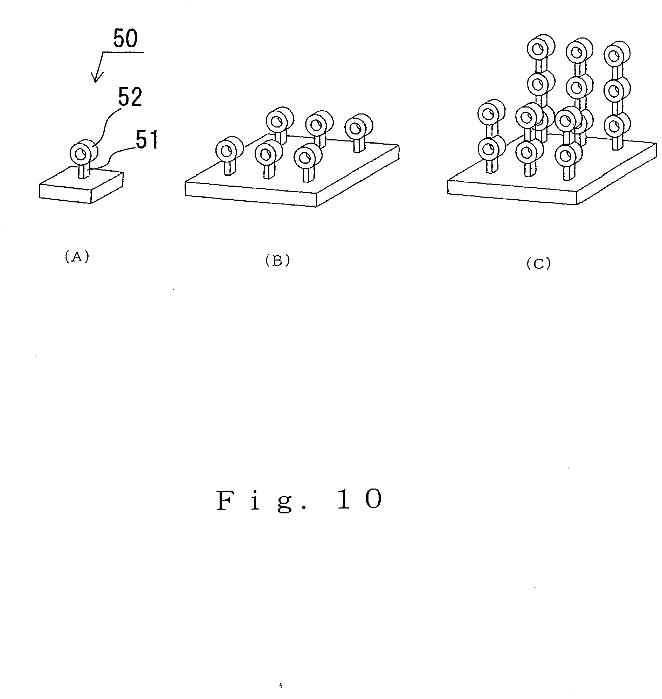

In Figs.1, 2 and 3, one set of components which has the horizontal through hole, the rod-shaped pin member, the cylindrical pin member and the through hole formed in the vertical shaft, and which is a necessary element for forming and releasing the cylindrical protrusion section is arranged, and the molded product at the time of applying the first embodiment will mold the molded product in which one cylindrical protrusion section shown in Fig.10 (A) was formed. As described later, by disposing a plurality of the above-described set of components in the horizontal direction and the vertical direction, and by providing a plurality of the present devices, it is possible to form the molded product having a plurality of cylindrical protrusions (refer to Figs. 10B and C).

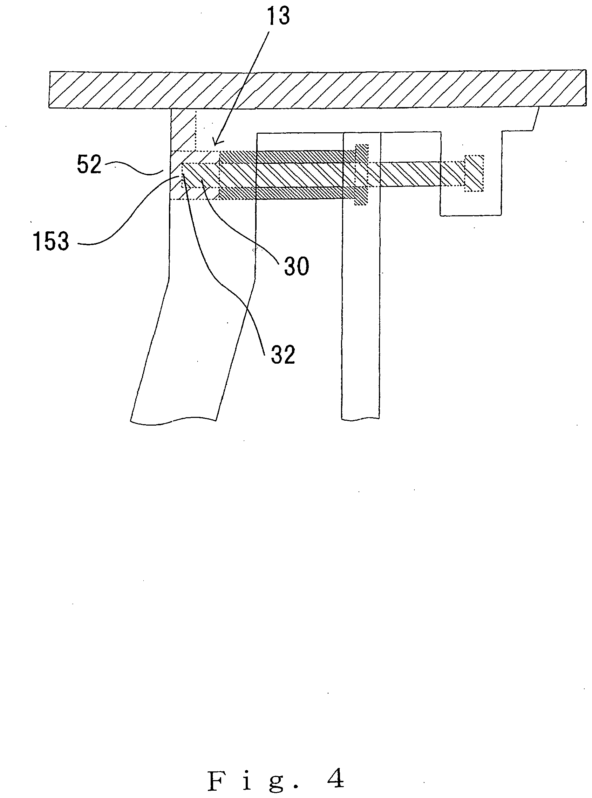

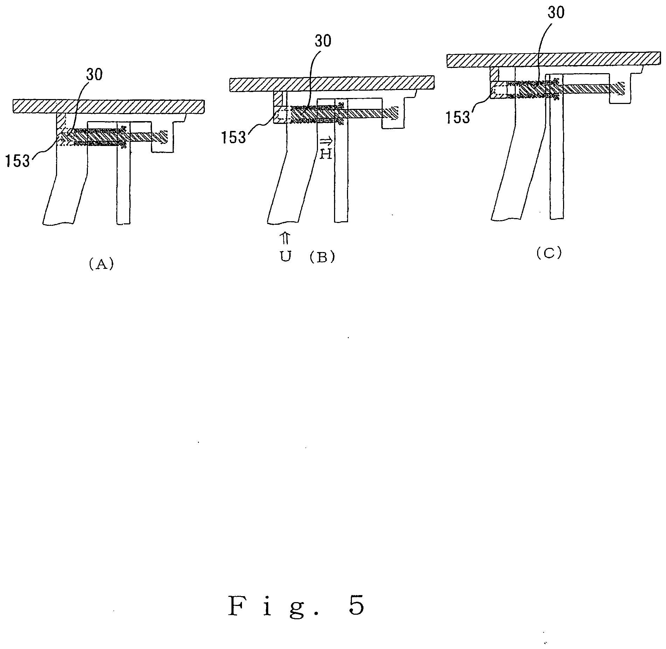

With reference to Figs.4 and 5, it describes about the second embodiment of this device. Fig.4 is the outline cross sectional view showing the principal part of the configuration example of the second embodiment, and Fig.5 shows the initial state (A) in the release process of the second embodiment, the operating state (B) in the middle of the shaft rise, and the operating state (C) at the time of mold release. As shown in Figs.4 and 5, the second embodiment of this device is constituted so that the constant interval (constant width) 153 may be secured from the bottom end of the cylindrical protrusion section 52 between the front ends 32 of the rod-shaped pin member and the rod-shaped pin member 30 may be inserted in to the horizontal through hole 13 formed in the vertical portion of the inclined shaft. The bottom surface will be formed in the cylindrical protrusion section which serves as the molded product by such composition. In the state where both shafts rise to the maximum, as shown in Fig.5 (C), the rod-shaped pin member 30 will be in a recessed state from the front end of the horizontal through hole 13 by the constant interval.

In the composition of the first embodiment shown in the Figs.1 to 3 mentioned above, the cylindrical protrusion section which becomes a mold object is a hollow cylindrical body opened at both ends, the rod-shaped pin member is inserted until it resulted in the bottom end of the cylindrical protrusion section which projects to the suspended section, and the front end of the rod-shaped pin member has penetrated the hollow section of the cylindrical protrusion section. On the other hand, in the configuration example of the second embodiment, it can be considered as the cylindrical body having the bottom which forms a bottom surface in the one end side of the cylindrical protrusion section made applicable to the mold object by constituting the rod-shaped pin member so that the constant interval may be set and inserted in from the bottom end of the cylindrical protrusion section.

The bottom end side of the cylindrical protrusion section is used as the bottom surface, and thickness at the bottom is arbitrarily determined by the spacing width of the front end of the rod-shaped pin member and the bottom end of the cylindrical protrusion section. In the case of thickening the bottom surface, insert the front end of the rod-shaped pin member with a wider spacing from the bottom surface of the cylindrical protrusion section, and in the case of thinning, it is possible to obtain a desired bottom surface thickness by inserting the front end face close to the bottom side. Since it mentioned above, the description of other component part and the operation and function of this device, etc. is omitted here.

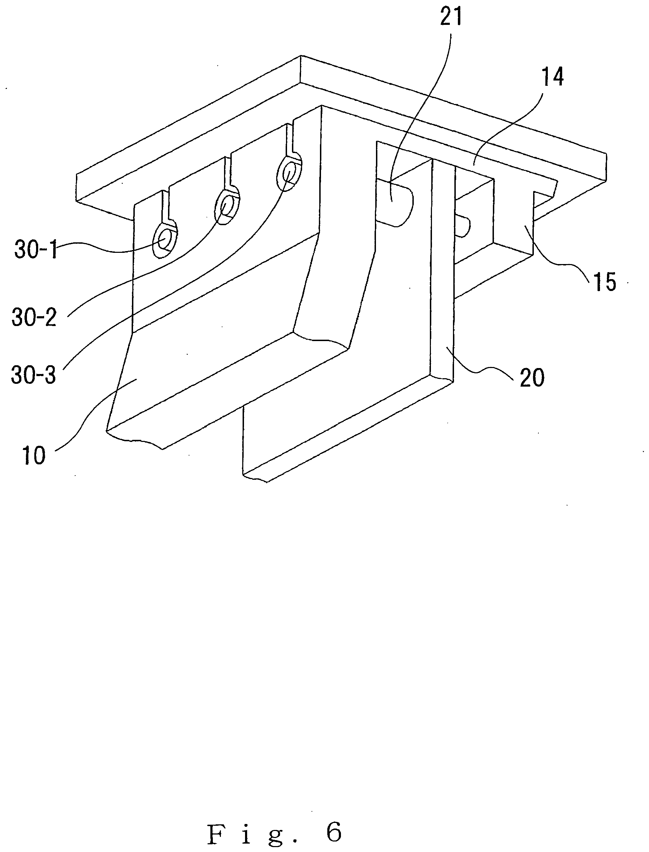

With reference to Fig.6, it describes about the third embodiment of this device. Fig.6 is the outline perspective view showing the configuration example of the third embodiment. In the third embodiment of this device, as shown in Fig.6, the inclined shaft 10 in which the horizontal section 14 and the rod-shaped pin member fixing section 15 were formed and the vertical shaft 20 extend horizontally, the set of components (hereinafter, to only call it "set of components") which has the horizontal through hole 13, the rod-shaped pin member 30, the cylindrical pin member 21, the through hole 22 formed in the vertical shaft, and which is used as an element required for formation and the release process of the cylindrical protrusion section, is arranged in the horizontal direction in the number corresponding to the number of the cylindrical protrusion to be the molded object, the device is configured so that the mechanism for operating the rod-shaped pin member and the cylindrical pin member operate simultaneously.

Three of the set of components are arranged in Fig.6. By this composition, as shown in Fig.10 (B), the molded product in which three cylindrical protrusion sections are arranged in the lateral direction is molded. Although three of the set components are arranged by the diagram, in the present invention, the set of components of 2 or 4 or more arbitrary number can be arranged. The arrangement number of the set of components is determined by overall adjustment with the scale of the mold, the length (height) and width of the inclined shaft, and the inclination angle of the inclined sliding portion, etc. Since it mentioned above, the description of each set of components and the operation and the function of this device, etc. is omitted here.

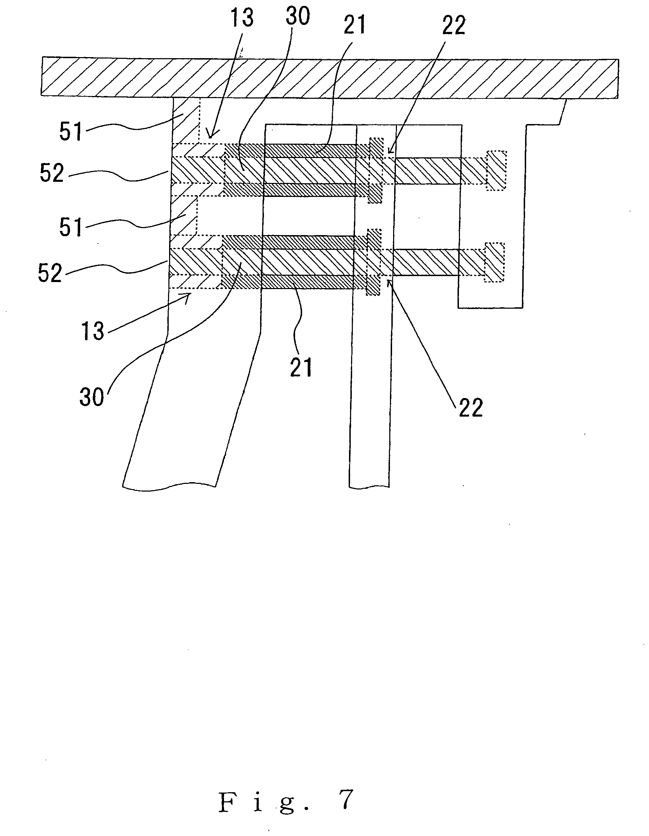

With reference to Fig.7, it describes about the fourth embodiment of this device. Fig.7 is the outline cross sectional view showing the principal part of the configuration example of the fourth embodiment. As opposed to the third embodiment arranging multiple set of components horizontally, the fourth embodiment of this device is what arranges multiple set of components in the vertical direction as shown in Fig.7, the set of components is arranged in the vertical direction in the number corresponding to the number of the cylindrical protrusion to be the molded object, the device is configured so that the mechanism for operating the rod-shaped pin member and the cylindrical pin member operate simultaneously.

As shown in Fig.7, two the suspended section 51 of the molded product and two the cylindrical protrusion sections 52 projected to this are formed, respectively, the end of the vertical portion of the inclined shaft is in contact with each suspended section, the rod-shaped pin member 30 is inserted in the hollow section of each cylindrical protrusion section, respectively, the cylindrical pin member 21 is inserted in each space 40, respectively, and the front end of the cylindrical protrusion section touches each front end of the cylindrical pin member, respectively, and it is constituted so that the mechanism for operating the rod-shaped pin member and the cylindrical pin member may operate simultaneously.

Fig.7 shows the composition which arranged two set of components in the vertical direction. According to this composition, the molded product formed by two cylindrical protrusion sections shown in the front row of Fig.10 (C) standing in a row up and down is molded. Although the example arranged two pieces in the vertical direction by the diagram is shown, the set of components of three or more arbitrary number can be arranged in the vertical direction in the present invention. According to the composition of three arranged, the molded product in which the cylindrical protrusion section shown in the back row of Fig.10 (C) is arranged in series at the top, middle and bottom is molded. The arrangement number of the set of components will adjust the scale of a mold, etc. synthetically, and will be determined. Since it mentioned above, the description of each set of components and the operation and function of this device, etc. is omitted here.

Although the mold object is one cylindrical protrusion section which projected to one suspended section in the composition of the first embodiment, the set of components can be added to horizontal and vertical direction in the composition of third and fourth embodiments, the desired number of molding in the cylindrical protrusion section to be the molded object can increase in the lateral direction, and it is possible to form a desired number of stitches in the vertical direction. As mentioned above, since the front end of the respective cylindrical pin members press the respective cylindrical protrusion sections so as not to move until the molded product is pushed upward and mold release is performed, even if it is the releasing treatment of the molded product in which a plurality of cylindrical protrusion sections are formed, it will assist and support so that it may be carried out smoothly.

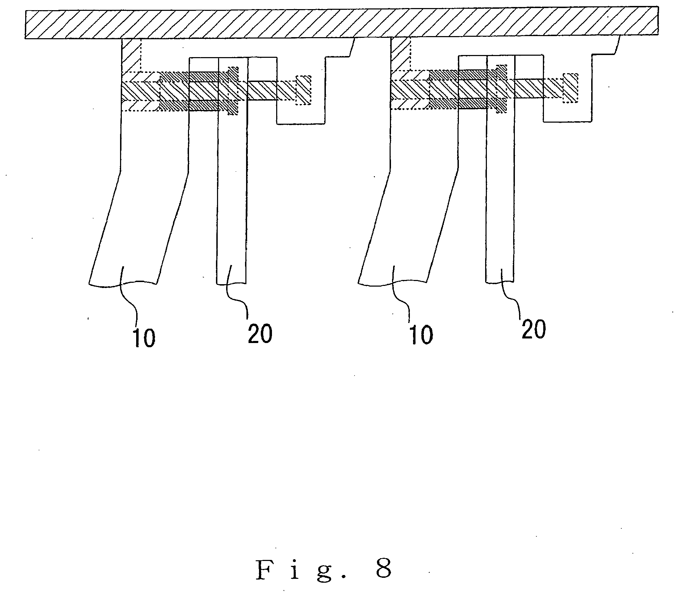

With reference to Fig.8, it describes about the fifth embodiment of this device. Fig.8 is the outline cross sectional view showing the principal part of the configuration example of the fifth embodiment. As shown in Fig.8, the fifth embodiment turns one according to the first to fourth embodiments provided with the inclined shaft 10 and the vertical shaft 20 of mold release support devices to a uniform direction, arranges them, and it is constituted so that the mechanism for operating the rod-shaped pin member and the cylindrical pin member may operate simultaneously. Although this device is carried out to arrange two pieces in the same orientation in Fig.8, these three or more device can be arranged in the present invention. The number of arrangement of this device will adjust the scale of a mold, etc. synthetically, and will be determined.

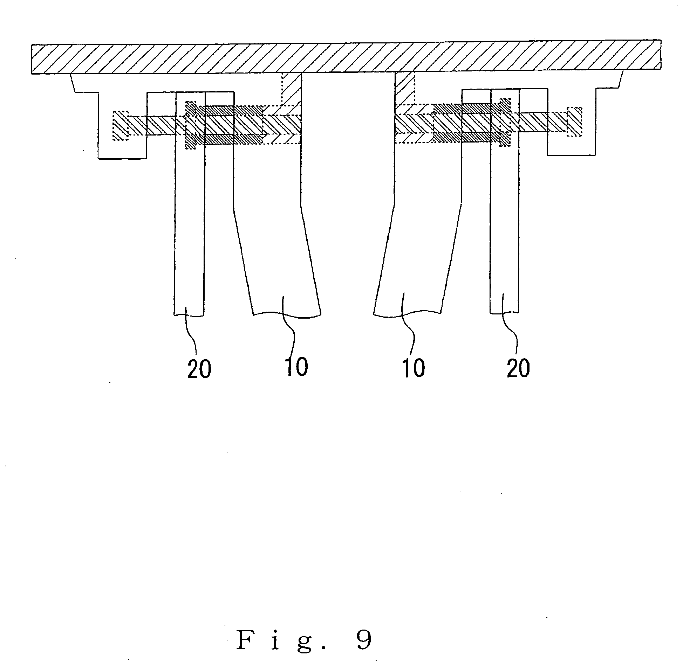

With reference to Fig.9, it describes about the sixth embodiment of this device. This device is arranged to the same direction in the fifth embodiment, on the other hand, the mold release support devices according to any one of the first to fourth embodiments provided with the inclined shaft and the vertical shaft is arranged so that the inclined shaft side may oppose in the sixth embodiment as shown in Fig.9, and it is constituted so that the mechanism for operating the rod-shaped pin member and the cylindrical pin member may operate simultaneously. In Fig.9, two pieces are arranged so that the inclined shaft side of this device may oppose, but two pieces can also be arranged so that the rod-shaped pin member fixing section 15 side of the inclined shaft of this device may oppose. Arrangement of this device will adjust the scale of a mold, etc. synthetically, and will be determined.

According to the composition which arranged two device in the fifth and sixth embodiments, as shown in Figs. 10 (B) and (C), the molded product arranged to two rows approximately can be molded into the longitudinal direction. Although the molded product is arranged in the longitudinal direction in this figure approximately at two rows, three or more rows of molded products can also be arranged in the longitudinal direction by arranging these three or more devices. Since it mentioned above, the description of the component part and the operation and the function of this device, etc. is omitted here.

Next, the example of the molded product molded with the application of the device for assisting in the release applied to the present invention with reference to Fig.10 is described. Fig.10 (A) is the example of the molded product molded with the application of the first embodiment, and shows the example of the molded product which molded one cylindrical protrusion section. Fig.10 (B) is the example of the molded product molded with the application of the third and the fifth, or the sixth embodiment, and the cylindrical protrusion section located in a line with three horizontal directions is arranged at two rows, the front row and the back row, respectively. Fig.10 (C) is the example of the molded product molded with the application of the third, the fourth and the fifth, or the sixth embodiment, and three cylindrical projection sections formed by connecting two upper and lower sides in the front row and three cylindrical projection sections formed by connecting two upper, middle and lower sides in the back row are arranged in the lateral direction, respectively. The molded product shown here is an example and it can make into various form the molded product to which the device for assisting in the release which is not limited to these and applied to the present invention is applied.

In the present invention, the cylindrical protrusion section of desired shape can be molded by processing the sectional shapes of the horizontal through hole 13, the rod-shaped pin member 30, the cylindrical pin member 21, and the through hole 22 formed in the inside of the vertical shaft into the shape corresponding to the sectional shape of the outer circumferential frame or the hollow section of the cylindrical protrusion section to be the molded object or the sectional shape of both the outer circumferential frame and the hollow section of the cylindrical protrusion section. Although it is considered as the cylindrical shape which made circular the sectional shape of the outer circumferential frame 152 of the cylindrical protrusion section and the hollow section 154 which are made applicable to molding in Figs.1 to 10, the sectional shape of the outer circumferential frame of the cylindrical protrusion section and the hollow section can be not only circular but also a triangle, a quadrangle, a rhombus, and a floral pattern and various shapes by processing the horizontal through hole, the rod-shaped pin member, etc. as appropriate in the present invention.

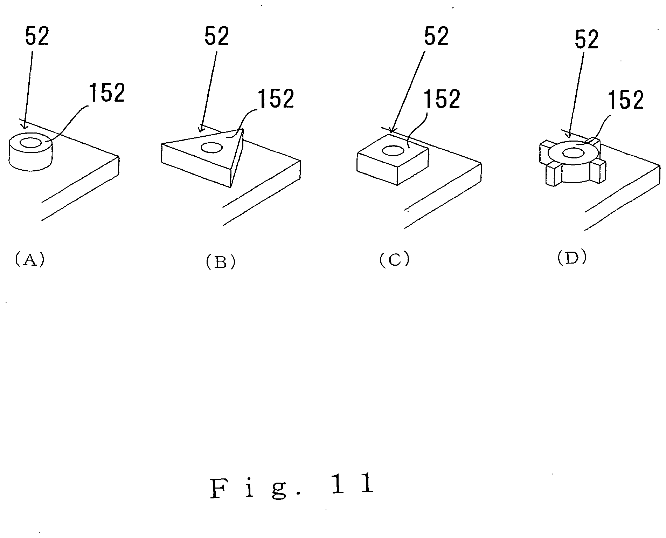

Since such sectional shape is determined by the sectional shape of space between the inner wall surface of the horizontal through hole and the outer circumferential surface of the rod-shaped pin member, the cylindrical protrusion section of desired shape can be molded by processing into corresponding shape the sectional shape of the horizontal through hole, the rod-shaped pin member, the cylindrical pin member, and the through hole formed in the vertical shaft used as component part required in order to change the shape of space. As illustrated in figs. 11 to 13, the sectional shapes of the outer circumferential frame 152 and the hollow section 154 of the cylindrical protrusion section of the molded product applied the present invention are can be made into various shape.

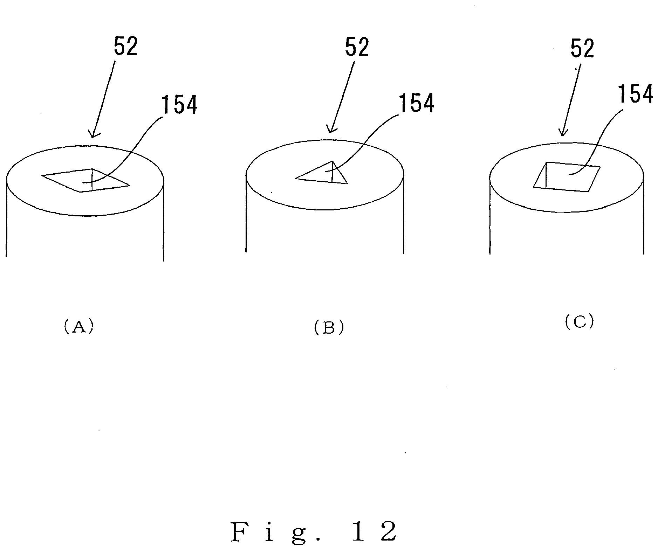

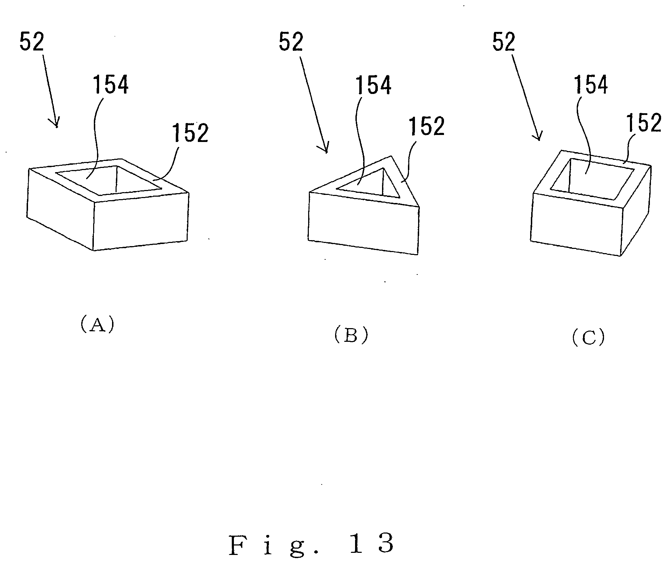

Fig.11 is the figure showing the example of the cylindrical protrusion section 52 which made sectional shape of the hollow section circular, the example to which (A) made the sectional shape of the outer circumferential frame 152 the circular, the example to which (B) made the sectional shape of the outer circumferential frame the triangle, the example to which (C) made the sectional shape of the outer circumferential frame the quadrangle, and the example to which (D) made the sectional shape of the outer circumferential frame the circular which forms protrusions on the outer periphery are shown. Fig.12 is the figure showing the example of the cylindrical protrusion section with circular sectional shape of the outer circumferential surface of the outer circumferential frame 152, and the example to which (A) made the sectional shape of the hollow section 154 the rhombus, the example to which (B) made the sectional shape of the hollow section the triangle, and the example to which (C) made the sectional shape of the hollow section the quadrangle are shown. Fig.13 is the figure showing the example of the hollow section 154 of the cylindrical protrusion section, and the sectional shape of outer circumferential frame 152 both sides, the example to which (A) made the rhombus sectional shape of the hollow section and the outer circumferential frame, the example to which (B) made the triangle sectional shape of the hollow section and the outer circumferential frame, and the example to which (C) made the quadrangle sectional shape of the hollow section and the outer circumferential frame are shown. Such form is illustration and is not limited to these.

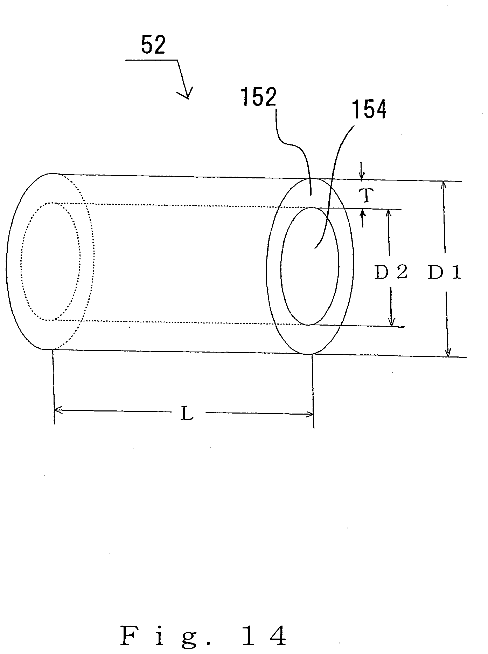

As shown in Fig.14, in the present invention, the cylindrical protrusion section of desired size can be molded by determining and processing each of the inner diameter of the horizontal through hole 13, the diameter (thickness) of the rod-shaped pin member 30, the length from the bottom end of the cylindrical protrusion section to end face of the cylindrical pin member in the space 40 formed between the inner wall surface 113 of the horizontal through hole and the outer circumferential surface 31 of the rod-shaped pin member, the diameter (thickness) of the section of space 40 to correspond to each size of the outer diameter D1, the inner diameter D2 and length L of the cylindrical protrusion section 52 to be the molded object, and thickness T of the outer circumferential frame 152 of the cylindrical protrusion section. Therefore, this device can be applied to the various molded products of various form widely used for the electrical and electric equipment etc., and size, and the correspondence of it to a broad product is attained.

In the present invention, each optional size of the outer diameter, the inner diameter and the length of the cylindrical protrusion section to be the molded object, and the thickness of the outer circumferential frame of the cylindrical protrusion section is determined by changing the inner diameter of the horizontal through hole, etc. as appropriate, as described above. Especially, the length (height) size of the cylindrical protrusion section will adjust and will be determined synthetically the width of the vertical portion of the inclined shaft, the angle of gradient of the inclined sliding portion, and the length (height) of the inclined shaft other than the length which reaches end the face of the cylindrical pin member from the bottom end of the cylindrical protrusion section in space 40.

In the present invention, the plastic product of the very complicated form and structure that the cylindrical protrusion section of any number, shape and size projected can be formed integrally at once in the case interior where the rib with which the one surface is opened wide serves as an outer frame by molding the rib which opens a bottom surface wide and serves as four side surfaces so that this device may be surrounded. In addition, by applying combining the device for assisting in the release of the molded product (Patent Application No. 2014-555013) and this device proposed by the inventor, the plastic product of the very complicated form and structure in which the cylindrical projection section and a non-cylindrical projection section are connected can be formed integrally.

### INDUSTRIAL APPLICABILITY

Since smooth mold release of the molded product which has the cylindrical protrusion section of various shape and size which are formed as an undercut part can be performed according to the present invention, the variation of the plastic product form to be the molded object will increase, and the products consisting of multiple parts, car parts such as an engine part, communication equipment such as wiring accessories, and home electronics can be molded by integral and one time by mold molding. The plastic molding is used in extensive fields, such as home electronics, other daily needs, office supplies, various industrial machines and equipment, transportation and transportation agencies of an automobile, a railroad, and an airplane etc., the present invention is used for manufacture of the molded product in such a field, and the contribution to a wide range of fields of industry is expected.

### DESCRIPTION OF REFERENCE NUMELALS

10 Inclined shaft
11 Vertical portion
12 Inclined sliding portion
13 Horizontal through hole
14 Horizontal section
15 Rod-shaped pin member fixing section
20 Vertical shaft
21 Cylindrical pin member
22 Through hole
30, 30-1, 30-2, and 30-3 Rod-shaped pin member
31 Outer circumferential surface of rod-shaped pin member
32 Front end of rod-shaped pin member
40 Space (molten resin filling space, cylindrical pin member insert space)
41 Position where cylindrical pin member front end touches cylindrical protrusion section outer circumferential frame
50 Molded product (cavity plate)
51 Suspended section
52 Cylindrical protrusion section
113 Inner wall surface of horizontal through hole
152 Outer circumferential frame of cylindrical protrusion section
153 Interval (width) of cylindrical protrusion section bottom end and rod-shaped pin member front end
154 Hollow section of cylindrical protrusion section
D1 Outer diameter of cylindrical protrusion section
D2 Inner diameter of cylindrical protrusion section
L Length of cylindrical protrusion section
T Thickness of cylindrical protrusion section outer circumferential frame
U Direction of rising movement
H Direction of horizontal movement

## Claims

1. A device for assisting in a release of a molded product in a mold provided with an inclined slide mechanism, the device comprising:
an inclined shaft (10) having near a part of an upper end thereof a vertically-shaped vertical portion (11), which is formed so that a lower side of the vertical portion (11) has an outwardly inclined sliding portion (12), and which is provided on a suspended section side formed under the molded product (50), and
a vertical shaft (20) which is entirely parallel to the vertical portion (11), which has substantially a same length with the inclined shaft (10), and which is formed on a rod-shaped pin member fixing section (15) of the inclined shaft (10), respectively, and
the inclined shaft (10) has a horizontal through hole (13) which is formed inside the vertical portion (11) and in which the rod-shaped pin member (30) is inserted, a horizontal section (14) which makes a right angle at an upper side, and a rod-shaped pin member fixing section (15) for fixing a back end portion with the rod-shaped pin member (30) oriented in a horizontal direction on an end portion of the vertical shaft side of the horizontal section (14), respectively,
the vertical shaft (20) is configured to fix a back end portion of a cylindrical pin member (21) movably inserted into a space (40) formed between an inner wall surface (113) of the horizontal through hole (13) of the inclined shaft (10) and an outer circumferential surface (31) of the rod-shaped pin member (30) in the horizontal direction, and wherein in the rod-shaped member (30) a through hole (22) is formed allowing the rod-shaped pin member (30) to move inside the cylindrical pin member (21),
the vertical portion (11) of the inclined shaft (10) is processed so that the molded product (50) side forms the shape corresponding to the shape of the suspended section (51) of the molded product (50), the rod-shaped pin member (30) is inserted in a central part of the horizontal through hole (13) formed in the vertical portion (11) until it reaches a bottom end of a cylindrical protrusion section (52) which constitutes the molded product (50), is formed in the space of the inclined shaft and is projected to the suspended section (51), an outer circumferential frame (152) which constitutes the molded product (50), is formed in the space (40) of the inclined shaft (10), forms a periphery of the cylindrical protrusion section and has a predetermined thickness is provided in the space of the horizontal through hole (13) until it reaches a position (41) which touches a front end of the cylindrical pin member (21) of the vertical shaft (20) from the bottom end of the cylindrical protrusion section, and the cylindrical pin member (21) which has substantially a same thickness with the outer circumferential frame (152) is configured to be movably inserted in the space from the position (41) where a front end of the outer circumferential frame (152) touches to an end of the horizontal through hole (13),
the inclined shaft (10) and the vertical shaft (20) are configured to simultaneously move up and down, along with the approaching movement to the vertical shaft side during the rising movement of the inclined shaft (10), the vertical portion (11) of the inclined shaft (10) is separated from the suspended section of the molded product (50) and the cylindrical protrusion section (52), the rod-shaped pin member (30) comes out of a hollow section of the cylindrical protrusion section (52), and the front end of the cylindrical pin member (21) inserted in the space protrudes from the horizontal through hole (13), the front end of the cylindrical pin member (21) is configured to touch the front end of the outer circumferential frame (152) of the cylindrical protrusion section (52) to press the cylindrical protrusion section (52) not to be moved, and the device is configured to assist smooth release.

2. The device for assisting in the release of the molded product according to claim 1, wherein the rod-shaped pin member (30) is inserted into the horizontal through hole (13) at a constant interval (153) between the bottom end of the cylindrical protrusion section and the front end (32) of the rod-shaped pin member (30).

3. The device for assisting in the release of the molded product according to any of claims 1 and 2, wherein the inclined shaft (10) and the vertical shaft (20) are extended in the horizontal direction, a set of components having the horizontal through hole (13), the rod-shaped pin member (30), the cylindrical pin member (21) and the through hole (22) are arranged in the horizontal direction in the number corresponding to the number of the cylindrical protrusion to be the molded object, the device is configured so that the mechanism for operating the rod-shaped pin member (30) and the cylindrical pin member (21) operate simultaneously.

4. The device for assisting in the release of the molded product according to any one of claims 1 to 3, wherein a set of components having the horizontal through hole (13), the rod-shaped pin member (30), the cylindrical pin member (21) and the through hole (22) are arranged in the vertical direction in the number corresponding to the number of the cylindrical protrusion to be the molded object (50), the device is configured so that the mechanism for operating the rod-shaped pin member (30) and the cylindrical pin member (21) operate simultaneously.

5. A plurality of the devices for assisting in the release of the molded product according to any one of claims 1 to 4 are arranged in the same direction, the mechanism for operating the rod-shaped pin member (30) and the cylindrical pin member (21) operate simultaneously.

6. The device for assisting in the release of the molded product according to any one of claims 1 to 4 is arranged with the inclined shaft side facing,the mechanism for operating the rod-shaped pin member (30) and the cylindrical pin member (21) operate simultaneously.

7. The device for assisting in the release of the molded product according to any one of claims 1 to 6, wherein sectional shapes of the horizontal through hole (13), the rod-shaped pin member (30), the cylindrical pin member (21) and the through hole (22) formed inside the vertical shaft (20) are determined and processed according to the shape corresponding to the sectional shape of the outer circumferential frame (152) of the cylindrical protrusion section (52) and/or a hollow section (154) of the cylindrical protrusion section to be the molded object.

## Patentansprüche

1. Vorrichtung zur Unterstützung bei der Freisetzung eines Formprodukts in einer Form, die mit einem geneigten Gleitmechanismus versehen ist, wobei die Vorrichtung umfasst:
einen geneigten Schaft (10), der in der Nähe eines Teils eines oberen Endes davon einen vertikal geformten vertikalen Abschnitt (11) aufweist, der so ausgebildet ist, dass eine Unterseite des vertikalen Abschnitts (11) einen nach außen geneigten Gleitabschnitt (12) aufweist, und der an einer Seite eines hängenden Teils vorgesehen ist, das unter dem Formprodukt (50) ausgebildet ist, und
einen vertikalen Schaft (20), der vollständig parallel zum vertikalen Abschnitt (11) ist, der im Wesentlichen eine gleiche Länge wie der geneigte Schaft (10) aufweist und der an einem stangenförmigen Stiftelementbefestigungsabschnitt (15) des geneigten Schafts (10) ausgebildet ist, und
wobei der geneigte Schaft (10) ein horizontales Durchgangsloch (13) aufweist, das innerhalb des vertikalen Abschnitts (11) ausgebildet ist und in das das stangenförmige Stiftelement (30) eingesetzt ist, einen horizontalen Abschnitt (14), der an einer Oberseite einen rechten Winkel bildet, und einen stangenförmigen Stiftelementbefestigungsabschnitt (15) zur Befestigung eines hinteren Endabschnitts mit dem stangenförmigen Stiftelement (30), das in horizontaler Richtung an jeweils einem Endabschnitt der Seite des vertikalen Schafts des horizontalen Abschnitts (14) ausgerichtet ist,
wobei der vertikale Schaft (20) konfiguriert ist, um einen hinteren Endabschnitt eines zylindrischen Stiftelements (21), das beweglich in einen Raum (40) eingesetzt ist, der zwischen einer Innenwandfläche (113) des horizontalen Durchgangslochs (13) des geneigten Schafts (10) und einer Außenumfangsfläche (31) des stangenförmigen Stiftelements (30) in horizontaler Richtung gebildet ist, zu fixieren, und wobei in dem stangenförmigen Element (30) ein Durchgangsloch (22) ausgebildet ist, das es dem stangenförmigen Stiftelement (30) ermöglicht, sich innerhalb des zylindrischen Stiftelements (21) zu bewegen,
wobei der vertikale Abschnitt (11) des geneigten Schafts (10) so verarbeitet ist, dass die Seite des Formprodukts (50) die Form bildet, die der Form des Aufhängeteils (51) des geformten Produkts (50) entspricht, wobei das stangenförmige Stiftelement (30) in einen zentralen Teil des horizontalen Durchgangslochs (13), das in dem vertikalen Abschnitt (11) ausgebildet ist, eingeführt ist, bis es ein unteres Ende eines zylindrischen Vorsprungsabschnitts (52) erreicht, der das Formprodukt (50) bildet, das im Raum des geneigten Schafts gebildet wird und über das Aufhängeteil (51) ragt, wobei ein äußerer Umfangsrahmen (152), der das Formprodukt (50) bildet, im Raum (40) des geneigten Schafts (10) gebildet ist, und einen Umfang des zylindrischen Vorsprungsabschnitts bildet und eine vorbestimmte Dicke aufweist, die im Raum der horizontalen Durchgangsbohrung (13) vorgesehen ist, bis es eine Position (41) erreicht, und ein vorderes Ende des zylindrischen Stiftelements (21) des vertikalen Schafts (20) vom unteren Ende des zylindrischen Vorsprungsabschnitts berührt, und wobei das zylindrische Stiftelement (21), das im Wesentlichen eine gleiche Dicke wie der äußere Umfangsrahmen (152) aufweist, konfiguriert ist, um beweglich in den Raum von der Position (41) aus eingesetzt zu sein, an der ein vorderes Ende des äußeren Umfangsrahmens (152) an ein Ende der horizontalen Durchgangsbohrung (13) angreift,
wobei der geneigte Schaft (10) und der vertikale Schaft (20) konfiguriert sind, um sich gleichzeitig auf und ab zu bewegen, zusammen mit der Annäherungsbewegung an die Seite des vertikalen Schafts während der Aufwärtsbewegung des geneigten Schafts (10), wobei der vertikale Abschnitt (11) des geneigten Schafts (10) vom Aufhängeteil des Formprodukts (50) und dem zylindrischen Vorsprungsabschnitt (52) getrennt wird, wobei das stangenförmige Stiftelement (30) aus einem Hohlprofil des zylindrischen Vorsprungsabschnitts (52) herauskommt, und das vordere Ende des in den Raum eingesetzten zylindrischen Stiftelements (21) aus dem horizontalen Durchgangsloch (13) herausragt, wobei das vordere Ende des zylindrischen Stiftelements (21) konfiguriert ist, um das vordere Ende des äußeren Umfangsrahmens (152) des zylindrischen Vorsprungsabschnitts (52) zu berühren, um den zylindrischen Vorsprungsabschnitt (52), der nicht bewegt wird, zu drücken, und die Vorrichtung konfiguriert ist, um ein reibungsloses Lösen zu unterstützen.

2. Vorrichtung zur Unterstützung der Freisetzung des Formprodukts nach Anspruch 1, wobei das stangenförmige Stiftelement (30) in einem konstanten Abstand (153) zwischen dem unteren Ende des zylindrischen Vorsprungsabschnitts und dem vorderen Ende (32) des stangenförmigen Stiftelements (30) in das horizontale Durchgangsloch (13) eingesetzt ist.

3. Vorrichtung zur Unterstützung der Freisetzung des Formprodukts nach einem der Ansprüche 1 und 2, wobei der geneigte Schaft (10) und der vertikale Schaft (20) in horizontaler Richtung verlängert sind, wobei ein Satz von Komponenten, der das horizontale Durchgangsloch (13), das stangenförmige Stiftelement (30), das zylindrische Stiftelement (21) und das Durchgangsloch (22) aufweist, in horizontaler Richtung in der Anzahl angeordnet ist, die der Anzahl der zylindrischen Vorsprünge entspricht, die das Formobjekt sein soll, wobei die Vorrichtung konfiguriert ist, so dass der Mechanismus zum Betätigen des stangenförmigen Stiftelements (30) und des zylindrischen Stiftelements (21) gleichzeitig funktionieren.

4. Vorrichtung zur Unterstützung der Freisetzung des Formprodukts nach einem der Ansprüche 1 bis 3, wobei ein Satz von Komponenten, der das horizontale Durchgangsloch (13), das stabförmige Stiftelement (30), das zylindrische Stiftelement (21) und das Durchgangsloch (22) aufweist, in vertikaler Richtung in der Anzahl angeordnet ist, die der Anzahl der zylindrischen Vorsprünge entspricht, die das Formobjekt (50) sein soll, wobei die Vorrichtung konfiguriert ist, so dass der Mechanismus zum Betätigen des stangenförmigen Stiftelements (30) und des zylindrischen Stiftelements (21) gleichzeitig funktionieren.

5. Vielzahl von Vorrichtungen zur Unterstützung der Freisetzung des Formprodukts nach einem der Ansprüche 1 bis 4, die in der gleichen Richtung angeordnet sind, wobei der Mechanismus zum Betätigen des stangenförmigen Stiftelements (30) und des zylindrischen Stiftelements (21) gleichzeitig funktioniert.

6. Vorrichtung zur Unterstützung der Freisetzung des Formprodukts nach einem der Ansprüche 1 bis 4, die so angeordnet ist, dass die Seite des geneigten Schafts dem Mechanismus zum gleichzeitigen Betätigen des stangenförmigen Stiftelements (30) und des zylindrischen Stiftelements (21) zugewandt ist.

7. Vorrichtung zur Unterstützung der Freisetzung des Formprodukts nach einem der Ansprüche 1 bis 6, wobei Querschnittsformen des horizontalen Durchgangslochs (13), des stangenförmigen Stiftelements (30), des zylindrischen Stiftelements (21) und des Durchgangslochs (22), das innerhalb des vertikalen Schafts (20) ausgebildet ist, bestimmt und verarbeitet werden, entsprechend der Form, die der Querschnittsform des äußeren Umfangsrahmens (152) des zylindrischen Vorsprungsabschnitts (52) und/oder eines hohlen Abschnitts (154) des zylindrischen Vorsprungsabschnitts entspricht, die das Formobjekt sein soll.

## Revendications

1. Dispositif pour aider à une libération d'un produit moulé dans un moule pourvu d'un mécanisme coulissant incliné, le dispositif comprenant :
un arbre incliné (10) ayant près d'une partie d'une extrémité supérieure de celui-ci une portion verticale verticalement façonnée (11), qui est formée de telle sorte qu'un côté inférieur de la portion verticale (11) comporte une portion coulissante inclinée vers l'extérieur (12), et qui est disposée sur un côté de section suspendue formé sous le produit moulé (50), et
un arbre vertical (20) qui est entièrement parallèle à la portion verticale (11), qui a sensiblement une même longueur que l'arbre incliné (10), et qui est formé sur une section de fixation (15) d'élément tige en forme de broche de l'arbre incliné (10), respectivement, et
l'arbre incliné (10) comporte un trou traversant horizontal (13) qui est formé à l'intérieur de la portion verticale (11) et dans lequel l'élément tige en forme de broche (30) est inséré, une section horizontale (14) qui crée un angle droit au niveau d'un côté supérieur, et une section de fixation (15) d'élément tige en forme de broche pour fixer une portion d'extrémité arrière avec l'élément tige en forme de broche (30) orienté dans une direction horizontale sur une portion d'extrémité du côté arbre vertical de la section horizontal (14), respectivement,
l'arbre vertical (20) est configuré pour fixer une portion d'extrémité arrière d'un élément tige cylindrique (21) inséré de façon mobile dans un espace (40) formé entre une surface de paroi intérieure (113) du trou traversant horizontal (13) de l'arbre incliné (10) et une surface circonférentielle extérieure (31) de l'élément tige en forme de broche (30) dans la direction horizontale, et dans lequel dans l'élément en forme de broche (30) est formé un trou traversant (22) permettant à l'élément tige en forme de broche (30) de se déplacer à l'intérieur de l'élément tige cylindrique (21),
la portion verticale (11) de l'arbre incliné (10) est traitée de telle sorte que le côté produit moulé (50) forme la forme correspondant à la forme de la section suspendue (51) du produit moulé (50), l'élément tige en forme de broche (30) est inséré dans une partie centrale du trou traversant horizontal (13) formé dans la portion verticale (11) jusqu'à ce qu'il atteigne une extrémité de fond d'une section saillie cylindrique (52) qui constitue le produit moulé (50), est formé dans l'espace de l'arbre incliné et est projeté vers la section suspendue (51), un cadre circonférentiel extérieur (152) qui constitue le produit moulé (50), est formé dans l'espace (40) de l'arbre incliné (10), forme une périphérie de la section saillie cylindrique et a une épaisseur prédéterminée est disposé dans l'espace du trou traversant horizontal (13) jusqu'à ce qu'il atteigne une position (41) qui touche une extrémité avant de l'élément tige cylindrique (21) de l'arbre vertical (20) depuis l'extrémité de fond de la section saillie cylindrique, et l'élément tige cylindrique (21) qui a sensiblement une même épaisseur que le cadre circonférentiel extérieur (152) est configuré pour être inséré de façon mobile dans l'espace depuis la position (41) où une extrémité avant du cadre circonférentiel extérieur (152) touche une extrémité du trou traversant horizontal (13),
l'arbre incliné (10) et l'arbre vertical (20) sont configurés pour monter et descendre simultanément, avec le déplacement d'approche vers le côté arbre vertical durant la montée de l'arbre incliné (10), la portion verticale (11) de l'arbre incliné (10) est séparée de la section suspendue du produit moulé (50) et de la section saillie cylindrique (52), l'élément tige en forme de broche (30) sort d'une section creuse de la section saillie cylindrique (52), et l'extrémité avant de l'élément tige cylindrique (21) inséré dans l'espace fait saillie depuis le trou traversant horizontal (13), l'extrémité avant de l'élément tige cylindrique (21) est configurée pour toucher l'extrémité avant du cadre circonférentiel extérieur (152) de la section saillie cylindrique (52) pour presser la section saillie cylindrique (52) pour qu'elle ne bouge pas, et le dispositif est configuré pour faciliter une libération en douceur.

2. Dispositif pour aider à la libération du produit moulé selon la revendication 1, dans lequel l'élément tige en forme de broche (30) est inséré dans le trou traversant horizontal (13) à un intervalle constant (153) entre l'extrémité de fond de la section saillie cylindrique et l'extrémité avant (32) de l'élément tige en forme de broche (30).

3. Dispositif pour aider à la libération du produit moulé selon l'une quelconque des revendications 1 et 2, dans lequel l'arbre incliné (10) et l'arbre vertical (20) sont étendus dans la direction horizontale, un ensemble de composants ayant le trou traversant horizontal (13), l'élément tige en forme de broche (30), l'élément tige cylindrique (21) et le trou traversant (22) sont agencés dans la direction horizontale au nombre correspondant au nombre de la saillie cylindrique pour être l'objet moulé, le dispositif est configuré de telle sorte que le mécanisme destiné à actionner l'élément tige en forme de broche (30) et l'élément tige cylindrique (21) fonctionnent simultanément.

4. Dispositif pour aider à la libération du produit moulé selon l'une quelconque des revendications 1 à 3, dans lequel un ensemble de composants ayant le trou traversant horizontal (13), l'élément tige en forme de broche (30), l'élément tige cylindrique (21) et le trou traversant (22) sont agencés dans la direction verticale au nombre correspondant au nombre de la saillie cylindrique pour être l'objet moulé (50), le dispositif est configuré de telle sorte que le mécanisme destiné à actionner l'élément tige en forme de broche (30) et l'élément tige cylindrique (21) fonctionnent simultanément.

5. Pluralité des dispositifs pour aider à la libération du produit moulé selon l'une quelconque des revendications 1 à 4 agencés dans la même direction, le mécanisme destiné à actionner l'élément tige en forme de broche (30) et l'élément tige cylindrique (21) fonctionnant simultanément.

6. Dispositif pour aider à la libération du produit moulé selon l'une quelconque des revendications 1 à 4 agencé avec le côté arbre incliné faisant face, le mécanisme destiné à actionner l'élément tige en forme de broche (30) et l'élément tige cylindrique (21) fonctionnant simultanément.

7. Dispositif pour aider à la libération du produit moulé selon l'une quelconque des revendications 1 à 6, dans lequel des formes en coupe du trou traversant horizontal (13), de l'élément tige en forme de broche (30), de l'élément tige cylindrique (21) et du trou traversant (22) formés à l'intérieur de l'arbre vertical (20) sont déterminées et traitées en fonction de la forme correspondant à la forme en coupe du cadre circonférentiel extérieur (152) de la section saillie cylindrique (52) et/ou une section creuse (154) de la section saillie cylindrique pour être l'objet moulé.
